# EUROPÄISCHE PATENTSCHRIFT

(11) **EP 2 070 256 B1**
(45) Veröffentlichungstag und Bekanntmachung des Hinweises auf die Patenterteilung: **22.06.2011**
(21) Anmeldenummer: 07820487.2
(22) Anmeldetag: 24.09.2007
(51) Int. Cl.: H04L 12/24

(54) **VERFAHREN ZUM REKONFIGURIEREN EINES KOMMUNIKATIONSNETZWERKS**
METHOD FOR RECONFIGURING A COMMUNICATION NETWORK
PROCÉDÉ POUR RECONFIGURER UN RÉSEAU DE COMMUNICATION

(30) Priorität: 28.09.2006 EP 06020452; 29.03.2007 DE 102007015226
(43) Veröffentlichungstag der Anmeldung: 17.06.2009
(73) Patentinhaber: SIEMENS AKTIENGESELLSCHAFT, 80333 München (DE)
(72) Erfinder: KULKARNI, Vivek, 82008 Unterhaching (DE); SFEIR, Elie, 80333 München (DE)
(86) Internationale Anmeldenummer: PCT/EP2007/060080
(87) Internationale Veröffentlichungsnummer: WO 2008/037679

(56) Entgegenhaltungen:
- EP-A- 0 404 423
- US-A- 5 260 945
- US-A1- 2005 044 211

## Beschreibung

Die Erfindung liegt auf dem technischen Gebiet der paketvermittelten Kommunikationsnetzwerke und betrifft ein Verfahren zum Rekonfigurieren eines Kommunikationsnetzwerks mit einer logischen Topologie in Form eines Spannbaums.

Mehrere paketvermittelte Netzwerke (LAN = Local Area Network) oder Segmente eines selben LAN können über "intelligente" Brücken oder Multiport-Brücken (Switches) miteinander verbunden werden. Hierbei können die Brücken die logische Topologie des Netzwerks mittels der durch sie hindurchgehenden Datenpakete (Datenrahmen) selbsttätig erfassen, indem sie die Schicht-2-Adressen des Netzwerks (MAC-Adressen, MAC = Medium Access Control) der Brücken nutzen;

In einem geswitchten Netzwerk sollte zwischen zwei Brücken immer nur ein einziger Netzwerkpfad für den Datenaustausch aktiv sein, da bei Vorliegen von Pfadschleifen Datenpakete in unerwünschter Weise dupliziert und mehrfach zum Ziel geleitet werden können, was zu Fehlfunktionen führen kann und die Leistung des Kommunikationsnetzwerks mindert.

In der.IEEE-Norm 802.1d ist ein als STP (STP = Spanning Tree Protocol) bezeichnetes Netzwerkprotokoll standardisiert, durch welches eine logische Topologie in Form eines die Brücken des Kommunikationsnetzwerks verbindender schleifenfreier Spannbaum eingerichtet wird. Während der Einrichtung des Spannbaums können keine Nutzdaten (Teilnehmerdaten) übertragen werden.

In STP werden Identifikatoren für alle Brücken (Brücken-ID) des Netzwerks vergeben, die jeweils aus der Schicht-2-Adresse (MAC-Adresse) der Brücke und einem Prioritätsfeld bestehen. Ebenso werden allen Anschlüssen (Ports) ein Identifikator (Port-ID) und Pfadkosten zugewiesen.

In STP können die Ports verschiedene Zustände einnehmen, nämlich einen Zustand "Blocking", in dem nur Konfigurationsrahmen, BPDUs (BPDU = Bridge Protocol Data Unit) genannt, von den Brücken akzeptiert werden, einen Zustand "Listening", während dem die aktive logische Topologie gebildet wird, einen Zustand "Learning", während dessen eine Bridging-Tabelle aus den gelesenen MAC-Acressen zusammengestellt wird, einen Zustand "Forwarding", in dem die Ports Nutzdaten weiterleiten sollen, und einen Zustand "Disabled", in dem Ports weder Nutzdaten noch BPDUs empfangen oder weiterleiten.

In STP erzeugt lediglich die Rootbrücke BPDUs, während die übrigen Brücken von sich aus keine BPDUs erzeugen, sondern nur von der Rootbrücke empfangene BPDUs weiterleiten (Relay). Mit Hilfe der in den BPDUs enthaltenen Informationen können die Brücken die Zustände ihrer Ports ändern, wie beispielsweise in der Patentanmeldung US-A1-2005/044211 beschrieben wird.

Jede BPDU enthält eine Reihe Felder, wie ein Flagfeld zum Anzeigen oder Bestätigen einer Topologieänderung, ein Rootbrücken-ID-Feld zur Identifizierung der Rootbrücke mit Angabe von Priorität und ID, ein Pfadkostenfeld zur Angabe der Pfadkosten der die BPDU sendenden Rootbrücke, ein Meldungsalterfeld (MessAge) zur Angabe des Zeitraums seit Aussenden der BPDU, ein MaxAge-Feld zur Angabe einer Zeitspanne nach deren Ablauf die Meldung gelöscht werden soll, ein Hello-Zeit-Feld zur Angabe der Zeitspanne zwischen regelmäßigen Konfigurationsmeldungen der Rootbrücke, und ein Vorwärtsverzögerungsfeld, das die Wartezeit nach einer Änderung der Topologie angibt.

Um eine schleifenfreie logische Topologie zu bilden, werden in STP vier Kriterien zur Bestimmung der höchsten Prioritäten der Brücken beziehungsweise deren Ports verwendet. Dies sind: die kleinste Rootbrücken-ID, die geringsten Pfadkosten zur Rootbrücke, die kleinste Sendebrücken-ID und die kleinste Port-ID.

Um eine Rootbrücke zu ermitteln, gehen in STP alle Ports der Brücken nach der Initialisierung (beispielsweise nach einem Neustart des Netzwerks) in den Zustand "Blocking", wobei jede Brücke zunächst annimmt, dass sie selbst eine Rootbrücke ist und eine entsprechende BPDU mit ihrer eigenen ID als Rootbrücken-ID an die anderen Brücken sendet. Anschließend wird die Brücke mit der niedrigsten Rootbrücken-ID zur Rootbrücke gewählt. Bei identischer Rootbrücken-ID wird als ergänzendes Kriterium die niedrigste MAC-Adresse heran gezogen.

Von der gewählten Rootbrücke aus werden anschließend alle Netzwerkpfade des Spannbaums festgelegt, über den ein Datenaustausch zwischen den Brücken im Kommunikationsnetzwerk erfolgen soll. Hierzu sendet die Rootbrücke zunächst BPDUs an die anderen Brücken. Jede Brücke bestimmt daraufhin als Root-Port einen Port, der die geringsten Pfadkosten zur Rootbrücke hat. Im Falle gleicher Pfadkosten wird als ergänzendes Kriterium die Port-ID heran gezogen. Anschließend werden auf Basis der Pfadkosten Designate-Ports bestimmt und die designierten Brücken des Spannbaums bestimmt.

In STP teilt die Rootbrücke allen Brücken im Spannbaum in regelmäßigen Abständen über eine BPDU (Hello-Signal) mit, dass sie noch da ist. Falls ein solches Hello-Signal ausbleibt, etwa aufgrund des Ausfalls eines Links oder der Rootbrücke selbst, ist eine Neukonfiguration (Rekonvergenz) des Kommunikationsnetzwerks zur Ermittlung eines neuen Spannbaums erforderlich, was in STP typischer Weise wenigstens 30 Sekunden in Anspruch nimmt. Da in dieser Zeit lediglich BPDUs, d. h. Datenpakete zur Ermittlung eines neuen Spannbaums übermittelt werden, ist das Kommunikationsnetzwerk für diese Zeitspanne für einen Nutzdatenaustausch nicht verwendbar.

Eine schnellere Rekonvergenz des Kommunikationsnetzwerks wird durch das Netzwerkprotokoll RSTP (RSTP = Rapid Spanning Tree Protocol) ermöglicht, welches in der IEEE-Norm 802.1w standardisiert ist. In RSTP werden alternative Ports ermittelt, welche BPDUs von anderen Brücken blockieren und einen alternativen Weg zur Rootbrücke bieten, falls der Root-Port ausfällt. In RSTP wurde weiterhin ein Proposal/Agreement Handshake-Mechanismus implementiert.

Während STP Brücken, die nicht Rootbrücke sind, nur dann BPDUs weiterleiten, wenn sie selbst vorher von der Rootbrücke eine BPDU erhalten haben, senden in RSTP Brücken auch von sich aus in vorgebbaren zeitlichen Abständen BPDUs. In RSTP ist festgelegt, dass eine Brücke ihren Link zu einer Nachbarbrücke verliert, wenn sie innerhalb der vorgebbaren Zeitspanne drei BPDUs nicht empfangen kann. Auf diese Weise kann ein Ausfall eines Links schneller als in STP erkannt werden. Wie Simulationen ergeben haben, beträgt die Konvergenzzeit in RSTP mehrere Sekunden, beispielsweise ca. 2 Sekunden bei Ausfall eines Links und ca. 7 Sekunden bei Ausfall einer Rootbrücke.

Obgleich RSTP im Vergleich zu STP eine deutliche Verkürzung der Ausfallzeit während der Rekonvergenz eines Kommunikationsnetzwerks ermöglicht, wäre zur Erfüllung geforderter Dienstgütemerkmale eine noch geringere Ausfallzeit insbesondere beim Ausfall einer Rootbrücke wünschenswert.

Demgegenüber besteht die Aufgabe der vorliegenden Erfindung darin, ein Verfahren zum Rekonfigurieren eines paketvermittelten Kommunikationsnetzwerks mit einer logischen Topologie in Form eines Spannbaums zur Verfügung zu stellen, mit dem bei Ausfall einer Rootbrücke die Ausfallzeit bis zur Wiederherstellung des Spannbaums vermindert werden kann.

Diese Aufgabe wird erfindungsgemäß durch ein Verfahren zum Rekonfigurieren eines paketvermittelten Kommunikationsnetzwerks mit den Merkmalen von Patentanspruch 1 gelöst. Vorteilhafte Ausgestaltungen der Erfindung sind durch die Merkmale der Unteransprüche angegeben.

Zur Lösung der Aufgabe ist erfindungsgemäß ein Verfahren zum Rekonfigurieren eines paketvermittelten Kommunikationsnetzwerks nach Ausfall einer Rootbrücke gezeigt. Das Netzwerk umfasst eine Mehrzahl Brücken, die über Datenlinks zum Austausch von Datenpaketen (Datenrahmen = Frames) miteinander verbunden sind. Hier und im Weiteren werden die Netzknoten des Netzwerks als "Brücken" bezeichnet. Gleichwohl kann es sich hierbei im Sinne der Erfindung auch um Schalter (Switches = Multiport-Brücken) oder andere zur Vermittlung geeignete Netzknoten handeln. Die Brücken und deren Ports sind jeweils durch einen Identifikator (Brücken-ID, Port-ID) gekennzeichnet.

Das Netzwerk setzt ein proprietäres Netzwerkprotokoll ein, welches in der Lage ist, eine zum Datenaustausch eingesetzte logische Topologie in Form eines Spannbaums in dem Netzwerk einzurichten. Das Netzwerkprotokoll basiert beispielsweise auf dem Spanning Tree Protocol (SPT) gemäß IEEE-Norm 802.1d und basiert vorzugsweise auf dem Rapid Spanning Tree Protocol (RSPT) gemäß IEEE-Norm 802.1w oder dem Mutiple Spanning Tree Protocol (MSTP) gemäß IEEE-Norm 802.1s.

Ausgehend von einem Netzwerk mit einem eingerichteten Spannbaum, der eine Rootbrücke und über aktive Datenlinks zum Austausch von Datenpaketen mit der Rootbrücke verbundene designierte Brücken enthält, umfasst das erfindungsgemäße Verfahren bei Ausfall einer Rootbrücke eines Spannbaums die folgenden Schritte:

Erfassen eines Ausfalls eines direkten Links zur Rootbrücke des Spannbaums durch eine mit der Rootbrücke über diesen Link direkt verbundene erste Brücke, welche keine alternativen Ports, die anstelle des Root-Ports als alternative Root-Ports eingesetzt werden können, aufweist. Gleichzeitig wird mit dem Erfassen des Ausfalls des direkten Links zur Rootbrücke ein Timer gestartet.

Erfassen eines Ausfalls eines direkten Links zur Rootbrücke durch wenigstens eine mit der Rootbrücke über diesen Link direkt verbundene zweite Brücke, welche wenigstens einen alternativen Port aufweist, der anstelle des Root-Ports als alternativer Root-Port eingesetzt werden kann. Eine solche Erfassung erfolgt innerhalb einer wählbaren Zeitspanne des von der ersten Brücke gestarteten Timers. Die wählbare Zeitspanne des Timers beträgt beispielsweise maximal 10 Millisekunden. Zudem wird in der zweiten Brücke der alternative Port als neuer Root-Port bestimmt.

Übertragen von, von der ersten Brücke generierten, ersten Konfigurationsrahmen (RSTP-BPDUs) an die anderen Brücken des Netzwerks. Hierzu werden die ersten Konfigurationsrahmen an die mit der ersten Brücke direkt verbundenen Brücken gesendet und von diesen gegebenenfalls weitergeleitet. In dem ersten Konfigurationsrahmen ist als Herkunftskennung (Rootbrücken-ID) die ID der ersten Brücke enthalten. Die erste Brücke erklärt sich somit den anderen Brücken gegenüber als neue Rootbrücke.

Empfangen des ersten Konfigurationsrahmens durch wenigstens eine dritte Brücke, die keine direkte Verbindung zur Rootbrücke hat, das heißt, die keine Ports mit einem gesetzten Flag "Verbunden-mit-Root" (siehe unten) hat. Der Empfang des ersten Konfigurationsrahmens löst die Übertragung von, von der dritten Brücke generierten, zweiten Konfigurationsrahmen an die anderen Brücken des Netzwerks aus. Hierzu werden die zweiten Konfigurationsrahmen an die mit der dritten Brücke direkt verbundenen Brücken gesendet und von diesen gegebenenfalls weitergeleitet.

Der zweite Konfigurationsrahmen, hier als erste RFN-BPDU (RFN = Root Failure Notification) bezeichnet, umfasst die folgenden Felder:
i) Typ: gesetzt auf RFN-BPDU;
ii) Rootbrücken-ID: gesetzt auf die ID der ausgefallenen Rootbrücke;
iii) Herkunftsbrücken-ID: eingestellt auf die ID der Brücke, die als erste diese RFN-BPDU gesendet hat; dieses Feld wird von Brücken, die die RFN-BPDU weiterleiten, nicht geändert; hier ist die Brücken-ID der dritten Brücke eingetragen.
iv) Root-Link-Ausfallsflag: wird verwendet, um zwischen dem Ausfall eines mit der Rootbrücke direkt verbundenen Links und dem Ausfall der Rootbrücke selbst zu unterscheiden; hier gesetzt.

In der ersten RFN-BPDU ist somit das den Ausfall des direkten Links der ersten Brücke zur Rootbrücke kennzeichnende Flag gesetzt und als Herkunftsbrücken-ID die Kennung der dritten Brücke enthalten. Die erste RFN-BPDU soll alle anderen Brücken darüber informieren, dass die erste Brücke, die sich selbst als neue Rootbrücke ausgibt, ihre direkte Verbindung zur alten Rootbrücke verloren hat. Diese Mitteilung impliziert nicht notwendiger Weise, dass die alte Rootbrücke tatsächlich ausgefallen ist. Es könnte auch lediglich der Link zur Rootbrücke ausgefallen sein.

Erfassen des ersten Konfigurationsrahmens (RSTP-BPDU) oder des zweiten Konfigurationsrahmens (erste RFN-BPDU) durch die zweite Brücke, bei welcher es sich um eine Brücke mit direkter Verbindung zur (alten) Rootbrücke handelt, das heißt, die wenigstens einen Port hat, für den das Flag "Verbunden-mit-Root" (siehe unten) gesetzt ist und der bereits ausgefallen ist aufgrund des Ausfalls der Rootbrücke. Dies löst die Übertragung eines von der zweiten Brücke generierten dritten Konfigurationsrahmens an die anderen Brücken des Netzwerks aus. Hierzu werden die dritten Konfigurationsrahmen an die mit der zweiten Brücke direkt verbundenen Brücken gesendet und von diesen gegebenenfalls weitergeleitet.

Der dritte Konfigurationsrahmen, hier als zweite RFN-BPDU bezeichnet, hat dieselben Typfelder wie die erste RFN-BPDU. Sie umfasst somit die folgenden Felder:
i) Typ: gesetzt auf RFN-BPDU.
ii) Rootbrücken-ID: gesetzt auf die Brücken-ID der versagenden Rootbrücke.
iii) Herkunftsbrücken-ID: eingestellt auf die Brücken-ID der zweiten Brücke,
iv) Root-Link-Ausfallsflag: gelöscht.

In der zweiten RFN-BPDU ist somit das den Ausfall des direkten Links der ersten Brücke zur Rootbrücke kennzeichnende Flag gelöscht und als Herkunftsbrücken-ID die Kennung der zweiten Brücke enthalten. Die zweite RFN-BPDU soll die anderen Brücken darüber informieren, dass die Rootbrücke ausgefallen ist, basierend auf der Annahme, dass die zweite Brücke eine RFN-BPDU von einer anderen Brücke (erste Brücke) empfangen hat, die ebenso ihre direkte Verbindung zur Rootbrücke verloren hat.

Empfangen des dritten Konfigurationsrahmens (zweite RFN-BPDU) durch die Brücken des Netzwerks und Auslösen der Rekonfiguration (Einrichtung eines neuen Spannbaums) in dem Kommunikationsnetzwerk mittels des Netzwerkprotokolls. Jede Brücke löscht hierbei die Zustände ihrer Ports und führt gegebenenfalls einen Neustart durch, um die Wahl einer neuen Rootbrücke und die folgende Ermittlung von designierten Brücken auszulösen.

In dem Kommunikationsnetzwerk überwacht jede Brücke jeden direkt mit der Rootbrücke verbundenen Port, indem an dem Port empfangene Konfigurationsrahmen (BPDUs) der Rootbrücke überwacht werden. In Punkt-zu-Punkt-Verbindungen ist jeder Port ein Root-Port, der eine BPDU empfängt, in der die Sendebrücken-ID identisch zur Rootbrücken-ID ist. Zur Kennzeichnung als Root-Port wird für jeden Port in diesem Fall ein Flag "Verbunden-mit-Root" gesetzt. Dies wird für jede empfangene BPDU geprüft.

In dem Kommunikationsnetzwerk wird in jeder Brücke die in einer empfangenen RFN-BPDU enthaltene Information gespeichert. Die gespeicherte Information einer RFN-BPDU wird mit der Information einer darauf folgend erhaltenen RFN-BPDU verglichen. Wenn die Information redundant ist, wird nichts unternommen und eine empfangene RFN-BPDU wird nicht weitergeleitet. Andernfalls wird die RNF-BPDU verarbeitet und weitergeleitet. Eine Brücke die eine erste RFN-BPDU mit gesetztem Flag "Verbunden-mit-Root" empfängt, verarbeitet und leitet diese erste RFN-BPDU somit nur dann unverändert an ihre anderen Ports weiter, wenn die in der empfangenen ersten RFN-BPDU enthaltene Information nicht redundant ist. Eine Brücke die eine zweite RFN-BPDU mit gelöschtem Flag "Verbunden-mit-Root" empfängt, verarbeitet und leitet diese somit nur dann unverändert an ihre anderen Ports weiter, wenn die in der empfangenen zweiten RFN-BPDU enthaltene Information nicht redundant ist.

Wenn in dem erfindungsgemäßen Verfahren wenigstens zwei direkte Links zur Rootbrücke innerhalb der wählbaren Zeitspanne des ersten Timers ausfallen, wird die Einrichtung eines neuen Spannbaums unter Auslassung der als ausgefallen angenommenen Rootbrücke ausgelöst. Dies bedeutet jedoch nicht unbedingt, dass die alte Rootbrücke tatsächlich ausgefallen ist.

In dem erfindungsgemäßen Verfahren ist es deshalb von Vorteil, wenn innerhalb einer wählbaren Zeitspanne des Timers ein von der ursprünglichen Rootbrücke gesendeter Konfigurationsrahmen (BPDU) von den übrigen Brücken des Netzwerks nicht verarbeitet wird. In diesem Fall werden nach Ablauf der wählbaren Zeitspanne des Timers durch eine BPDU der ursprünglichen Rootbrücke die Wahl der ursprünglichen Rootbrücke zur neuen Rootbrücke und die Einrichtung eines neuen Spannbaums mittels des.Netzwerkprotokolls ausgelöst. Die Konvergenzzeit des Netzwerks wird hierdurch um die Zeitspanne des Timers verzögert. Da dieser Fall eher unwahrscheinlich ist, ist eine Zeitspanne von ca. 100 Millisekunden akzeptabel.

Durch das oben beschriebene erfindungsgemäße Verfahren kann in vorteilhafter Weise nach Ausfall einer Root-Brücke eine schnelle Rekonfiguration einer logischen Topologie in Form eines Spannbaums eines paketvermittelten Kommunikationsnetzwerks erreicht werden. Ein weiterer Vorteil des erfindungsgemäßen Verfahrens liegt darin, dass bei einer Wiederherstellung der alten Root-Brücke eine sehr schnelle Rekonfiguration unter Einbeziehung der alten Root-brücke erfolgen kann.

Die Erfindung erstreckt sich ferner auf ein paketvermitteltes Kommunikationsnetzwerk mit einer Mehrzahl Brücken, die über Datenlinks zum Austausch von Datenpaketen miteinander verbunden sind. Die Brücken sind hierbei so eingerichtet, dass ein wie oben beschriebenes Verfahren ausgeführt werden kann. Ein solches Kommunikationsnetzwerk ermöglicht in vorteilhafter Weise eine schnelle Rekonfiguration einer logischen Topologie in Form eines Spannbaums nach Ausfall einer Root-Brücke, sowie eine schnelle Rekonfiguration nach Wiederherstellung der Root-Brücke.

Des Weiteren erstreckt sich die Erfindung auf eine Brücke eines wie oben beschriebenen paketvermittelten Kommunikationsnetzwerkes, die mit einer elektronischen Datenverarbeitungseinrichtung versehen ist, die so eingerichtet ist, dass die Brücke ein wie oben beschriebenes Verfahren durchführen kann. Eine solche Brücke ermöglicht eine schnelle Rekonfiguration einer logischen Topologie in Form eines Spannbaums nach Ausfall der Root-Brücke, sowie eine schnelle Rekonfiguration nach Wiederherstellung der Root-Brücke.

Die Erfindung erstreckt sich weiterhin auf einen maschinenlesbarer Programmcode für die elektronische Datenverarbeitungseinrichtung einer solchen Brücke, der Steuerbefehle enthält, die die Datenverarbeitungseinrichtung zur Durchführung eines wie oben beschriebenen erfindungsgemäßen Verfahrens veranlassen. Des Weiteren erstreckt sich die Erfindung auf ein Speichermedium mit einem darauf gespeicherten solchen maschinenlesbaren Programmcode.

Die Erfindung wird nun anhand eines Ausführungsbeispiels näher erläutert, wobei Bezug auf die beigefügten Zeichnungen genommen wird. Es zeigen:
- Fig. 1A-1E: in schematischer Weise ein Ausführungsbeispiel des erfindungsgemäßen Kommunikationsnetzwerks zur Veranschaulichung eines Ausführungsbei- spiels des erfindungsgemäßen Verfahrens;
- Fig. 2: ein Flussdiagramm zur Veranschaulichung der Verarbeitung von RSTP-BPDUs in dem erfindungs- gemäßen Verfahren;
- Fig. 3: ein Flussdiagramm zur Veranschaulichung der Verarbeitung von RFN-BPDUs in dem erfindungs- gemäßen Verfahren.

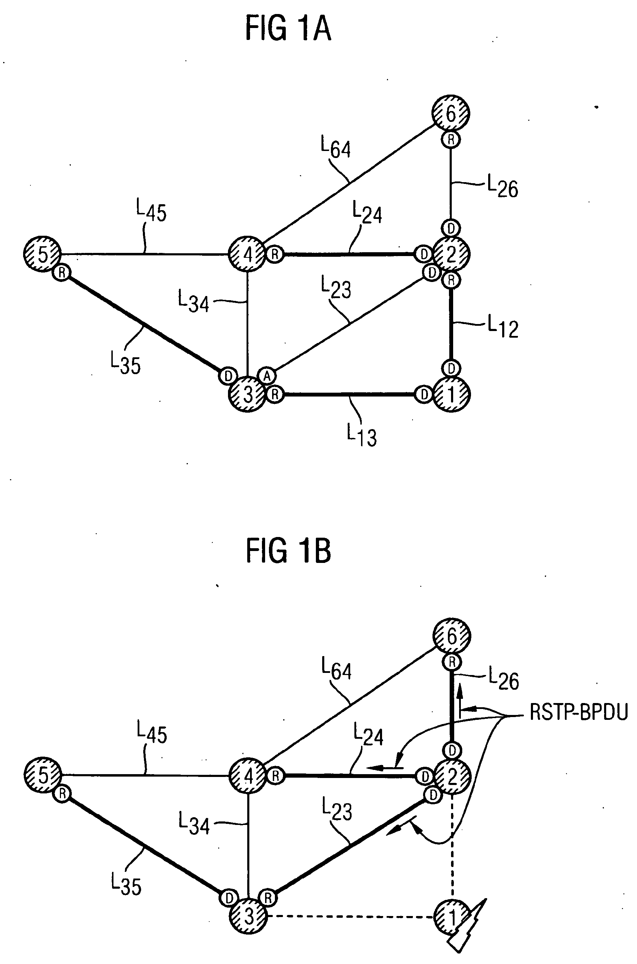

Es wird nun Bezug auf die Fig. 1A-1E genommen, worin in schematischer Weise ein Ausführungsbeispiel des erfindungsgemäßen Kommunikationsnetzwerks zur Veranschaulichung eines Ausführungsbeispiels des erfindungsgemäßen Verfahrens gezeigt ist.

Die physische Topologie des Kommunikationsnetzwerks umfasst eine Mehrzahl Brücken 1 bis 6, die jeweils mit einer Mehrzahl von Ports versehen sind, über welche die Brücken mittels (Daten-)Links L miteinander verbunden sind. So ist die Brücke 1 über einen Link L₁₂ mit der Brücke 2 und über einen Link L₁₃ mit der Brücke 3 verbunden. Die Brücke 2 ist über einen Link L₂₆ mit der Brücke 6, über einen Link L₂₄ mit der Brücke 4 und über einen Link L₂₃ mit der Brücke 3 verbunden. Die Brücke 3 ist über den Link L₁₃ mit der Brücke 1, über den Link L₂₃ mit der Brücke 2 und über einen Link L₃₅ mit der Brücke 5 verbunden. Die Brücke 4 ist über einen Link L₃₄ mit der Brücke 3, über den Link L₂₄ mit der Brücke 2, über einen Link L₆₄ mit der Brücke 6 und über einen Link L₄₅ mit der Brücke 5 verbunden. Die Brücke 5 ist über den Link L₄₅ mit der Brücke 4 und über den Link L₃₅ mit der Brücke 3 verbunden. Die Brücke 6 ist über den Link L₂₆ mit der Brücke 2 und über einen Link L₆₄ mit der Brücke 4 verbunden. Alle Links sind Punkt-zu-Punkt-Verbindungen und verbinden die Brücken birektional.

Die Brücken 1-6 sind jeweils mit elektronischen Steuereinrichtungen versehen, welche zur Ausführung der jeweiligen Funktionen des proprietären Netzprotokolls in geeigneter Weise eingerichtet sind. Das Netzwerkprotokoll basiert auf RSTP und ist zur Einrichtung einer logischen Topologie in Form eines Spannbaums in der Lage. Hierbei werden allen Brücken und Ports des Netzwerks eindeutige Identifikatoren und Pfadkosten zugewiesen.

Die Brücken sind so eingerichtet, dass sie erste Konfigurationsrahmen (RSTP-BPDUs) gemäß RSTP, proprietäre zweite Konfigurationsrahmen (erste RFN-BPDUS) und proprietäre dritte Konfigurationsrahmen (zweite RFN-BPDUS), mit Typfeldern wie sie vorstehend beschrieben wurden, generieren und weiterleiten können.

Fig. 1A zeigt einen ersten stabilen Zustand des Netzwerks, in dem ein alle Brücken des Netzwerks enthaltender erster Spannbaum eingerichtet ist. Der erste Spannbaum ist mit dickeren Linien innerhalb der physischen Topologie des Netzwerks dargestellt.

Im ersten Spannbaum dient die Brücke 1 als Rootbrücke. Der ersten Spannbaum umfasst die Links L₁₂ und L₁₃ zur Verbindung der Rootbrücke 1 mit den Brücken 2 und 3, wobei der Link L₁₂ den designierten Port D der Rootbrücke 1 und den Root-Port R der Brücke 2 und der Link L₁₃ den designierten Port D der Rootbrücke 1 und den Root-Port R der Brücke 3 miteinander verbindet. Der erste Spannbaum umfasst weiterhin die Links L₂₆ und L₂₄ zur Verbindung der Brücke 2 mit den Brücken 6 und 4, wobei der Link L₂₆ den designierten Port D der Brücke 2 und den Root-Port R der Brücke 6 und der Link L₂₄ den designierten Port D der Brücke 2 und den Root-Port R der Brücke 4 miteinander verbindet. Er umfasst ferner den Link L₃₅ zur Verbindung der Brücke 3 mit der Brücke 5, wobei der Link L₃₅ den designierten Port D der Brücke 3 und den Root-Port R der Brücke 5 miteinander verbindet.

Über den ersten Spannbaum können Datenpakete in Form von Nutzdaten und Konfigurationsrahmen zwischen allen Brücken 1-6 des Kommunikationsnetzwerks ausgetauscht werden.

In Fig. 1B ist ein Übergangszustand des Kommunikationsnetzwerks unmittelbar nach Ausfall der Rootbrücke 1 dargestellt. Der Ausfall der Rootbrücke 1 ist durch ein Blitzsymbol angedeutet. Zudem sind die beiden Links L₁₂ und L₁₃, welche die Rootbrücke 1 mit den unmittelbar angrenzenden Brücken 2 und 3 verbinden, als unterbrochene Linien dargestellt, um anzudeuten, dass die beiden unmittelbar angrenzenden Brücken 2, 3 an ihren Root-Ports R keine Verbindung mehr zur Rootbrücke 1 haben.

In den Root-Ports R der an die Rootbrücke 1 unmittelbar angrenzenden Brücken 2, 3 ist zur Kennzeichnung als Root-Port ein Flag "Verbunden-mit-Root" gesetzt. Das Flag "Verbunden-mit-Root" wird gesetzt, wenn eine BPDU von der Rootbrücke 1 empfangen wird, in der die Sendebrücken-ID identisch zur Rootbrücken-ID ist. Dies wird von den Brücken 2 und 3 für jede von der Rootbrücke 1 empfangene BPDU geprüft.

Die Rootbrücke 1 sendet in regelmäßigen zeitlichen Abständen BPDUs (Hello-Signal) an die designierten Brücken des ersten Spannbaums. Wenn die Rootbrücke 1 ausfällt, erkennen die beiden an die Rootbrücke 1 angrenzenden Brücken 2 und 3 jeweils an ihren Root-Ports R den Ausfall der Rootbrücke 1, da die BPDU der Rootbrücke 1 nicht mehr empfangen wird. Gleichermaßen ist es möglich, dass der Ausfall durch Hardware erfasst wird, das heißt dem Ausbleiben eines elektrischen Signals, was praktisch instantan erfolgen kann.

Die Brücke 2 ist über den Link L₁₂ unmittelbar mit der Rootbrücke 1 verbunden. Die Brücke 2 verfügt über keinen alternativen Port A, der im Versagensfall des Root-Ports R als alternativer Root-Port eingesetzt werden könnte. Sobald der Ausfall des Links L₁₂ zur Rootbrücke 1 durch Ausfall des Root-Ports R erkannt worden ist, erklärt sich die Brücke 2 als neue Rootbrücke, indem sie in RSTP konfigurierte erste Konfigurationsrahmen (RSTP-BPDUs) generiert und über alle ihre funktionierenden Ports und die Links L₂₃, L₂₄ und L₂₆ an die benachbarten Brücken 3, 4 und 6 aussendet. Die RSTP-BPDU wird von den anderen Brücken des Netzwerks gegebenenfalls weitergeleitet.

In den RSTP-BPDUs ist die Brücke 2 als (neue) Rootbrücke angegeben, indem ihre Brücken-ID in dem Typfeld für die Rootbrücken-ID eingetragen ist. Dies entspricht einem herkömmlichen RSTP-Verhalten. Zudem wird ein Timer gestartet. Das Timer-Signal ist in der RSTP-BPDU enthalten.

Die Brücke 3 ist über den Link L₁₃ unmittelbar mit der Rootbrücke 1 verbunden. Die Brücke 3 verfügt über einen alternativen Port A, der im Versagensfall des Root-Ports R als alternativer Root-Port eingesetzt werden könnte. Sobald der Ausfall der Rootbrücke 1 erkannt worden ist, ändert die Brücke 3 den Zustand ihres alternativen Port A zu einem Zustand als Root-Port R. Dies entspricht einem herkömmlichen RSTP-Verhalten.

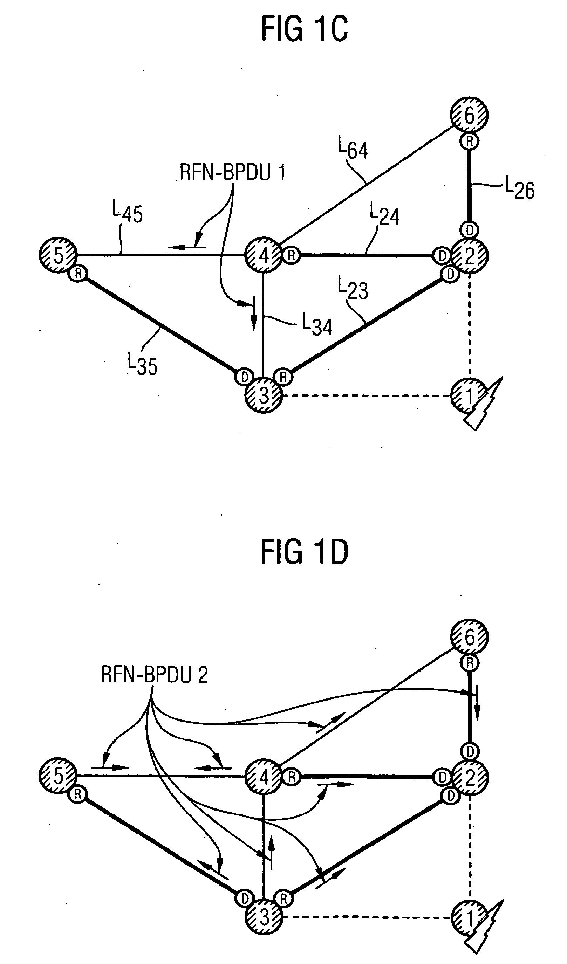

In Fig. 1C ist ein weiterer Zwischenzustand des Kommunikationsnetzwerks gezeigt, bei welchem die pfadkostenmäßig zur Brücke 2 nächst gelegene Brücke 4 über den Link L₂₄ die RSTP-BPDU von der Brücke 2 bereits empfangen und verarbeitet hat. Daraufhin generiert und sendet die Brücke 4 über alle ihre Ports, mit Ausnahme des Ports an dem sie die RSTP-BPDU empfangen hat, einen proprietären zweiten Konfigurationsrahmen, nämlich eine erste RFN-BPDU (RFN-BPDU 1). Die erste RFN-BPDU wird von den anderen Brücken des Netzwerks empfangen und verarbeitet. Zudem wird die in der ersten RFN-BPDU enthaltene Information in den Brücken gespeichert. Falls eine weitere erste RFN-BPDU von einer selben Brücke empfangen wird, wird die in der später empfangenen ersten RFN-BPDU enthaltene Information mit der gespeicherten Information der früher empfangenen RFN-BPDU verglichen. Eine unveränderte Weiterleitung der ersten RFN-BPDU durch die empfangende Brücke erfolgt nur dann, wenn die in der ersten RFN-BPDU enthaltene Information nicht redundant ist.

In der ersten RFN-BPDU ist das Root-Link-Ausfall-Flag gesetzt und die Sendebrücken-ID wird auf die Brücken-ID der sich als neue Rootbrücke erklärenden Brücke 2 eingestellt. Die erste RFN-BPDU dient dazu, alle Brücken darüber zu informieren, dass die Brücke 2, welche sich als neue Rootbrücke ausgibt, ihre unmittelbare Verbindung zur ursprünglichen Rootbrücke 1 verloren hat. Diese Benachrichtigung setzt nicht voraus, dass die Rootbrücke 1 tatsächlich ausgefallen ist. Vielmehr basiert sie lediglich auf der Tatsache, dass die Brücke 2 ihre unmittelbare Verbindung zur Rootbrücke 1 verloren hat, so dass diese Benachrichtigung auch dann ausgesendet würde, wenn lediglich der Link L₁₂ zwischen der Brücke 2 und der Rootbrücke 1 ausfällt.

In Fig. 1D ist ein weiterer Zwischenzustand des Kommunikationsnetzwerks gezeigt. In dem Netzwerk hat Brücke 3 eine unmittelbare Verbindung zur alten Rootbrücke 1. Die Brücke 3 weist einen mit der Rootbrücke 1 verbundenen Root-Port R auf, in dem das "Verbunden-mit-Root-Flag" gesetzt ist, wobei dieser Root-Port R aufgrund des Versagens der Rootbrücke 1 bereits ausgefallen ist.

Wenn die Brücke 3 die RSTP-BPDU oder die erste RFN-BPDU innerhalb einer vorgebbaren Zeitspanne des Timers empfangen und verarbeitet hat, generiert und sendet sie über alle ihre Ports einen proprietären dritten Konfigurationsrahmen, nämlich eine zweite RFN-BPDU (RFN-BPDU 2).

In der zweiten RFN-BPDU ist das Root-Link-Ausfall-Flag gelöscht und die Sendebrücken-ID wird auf die Brücken-ID der sendenden Brücke 3 eingestellt. Durch die zweite RFN-BPDU wird allen anderen Brücken mitgeteilt, dass die alte Rootbrücke 1 ausgefallen ist, basierend auf der Tatsache, dass die Brücke 3 ihre unmittelbare Verbindung zur alten Rootbrücke 1 verloren hat und zudem die RSTP-BPDU oder die erste RFN-BPDU mit gesetztem Root-Link-Ausfall-Flag empfangen hat, wodurch die Brücke 3 darüber informiert wurde, dass eine weitere Brücke (hier Brücke 2) ihre unmittelbare Verbindung zur alten Rootbrücke 1 verloren hat. Das Aussenden der zweiten RFN-BPDU beruht somit auf der Annahme, dass bei Ausfall der Links zwischen zwei unmittelbar mit der alten Rootbrücke 1 verbundenen. Brücken 2, 3 und der Rootbrücke 1 die Rootbrücke 1 ausgefallen ist.

Die zweite RFN-BPDU wird von den anderen Brücken des Netzwerks empfangen und verarbeitet, wodurch eine Rekonfiguration mit Ermittlung eines neuen Spannbaums basierend auf RSTP ausgelöst wird. Zudem wird die in der zweiten RFN-BPDU enthaltene Information in den Brücken gespeichert. Falls eine weitere zweite RFN-BPDU von einer selben Brücke empfangen wird, wird die in der später empfangenen zweiten RFN-BPDU enthaltene Information mit der gespeicherten Information der früher empfangenen zweiten RFN-BPDU verglichen. Eine unveränderte Weiterleitung der zweiten RFN-BPDU durch die empfangende Brücke erfolgt nur dann, wenn die in der zweiten RFN-BPDU enthaltene Information nicht redundant ist.

Jede Brücke, welche die zweite RFN-BPDU empfängt, schaltet sie auf ihre sämtlichen Ports um, mit Ausnahme des Ports, an dem sie die zweite RFN-BPDU empfangen hat. Zudem wird ein Neustart der Brücke ausgelöst, es sei denn, die Brücke hat bereits eine zweite RFN-BPDU mit gleicher Information empfangen und verarbeitet.

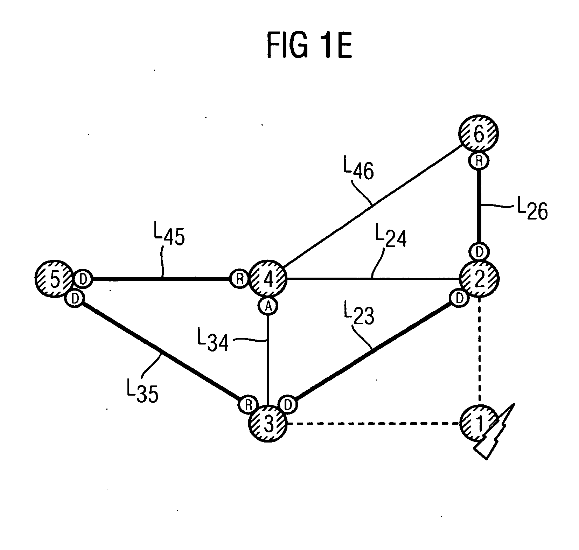

Fig. 1E zeigt einen zweiten stabilen Zustand des Netzwerks, in dem nach erfolgter Rekonvergenz ein alle Brücken des Netzwerks enthaltender zweiter Spannbaum stabil eingerichtet ist. Der zweite Spannbaum ist mit dickeren Linien in dem Netzwerk dargestellt. In dem zweiten Spannbaum dient die Brücke 5 als neue Rootbrücke. Der zweite Spannbaum umfasst die Links L₃₅ und L₄₅ zur Verbindung der neuen Rootbrücke 5 mit den Brücken 3 und 4, wobei der Link L₃₅ den designierten Port D der neuen Rootbrücke 5 und den Root-Port R der Brücke 3 und der Link L₄₅ den designierten Port D der neuen Rootbrücke 5 und den Root-Port R der Brücke 4 miteinander verbindet. Der zweite Spannbaum umfasst weiterhin den Link L₂₃ zur Verbindung der Brücke 3 mit der Brücke 2, wobei der Link L₂₃ den designierten Port D der Brücke 3 und den Root-Port R der Brücke 2 miteinander verbindet. Er umfasst weiterhin den Link L₂₆ zur Verbindung der Brücke 2 mit der Brücke 6, wobei der Link L₂₅ den designierten Port D der Brücke 2 und den Root-Port R der Brücke 6 miteinander verbindet. Über den zweiten Spannbaum können unter Ausschluss der alten Rootbrücke Datenpakete zwischen den Brücken 2-6 des Kommunikationsnetzwerks ausgetauscht werden.

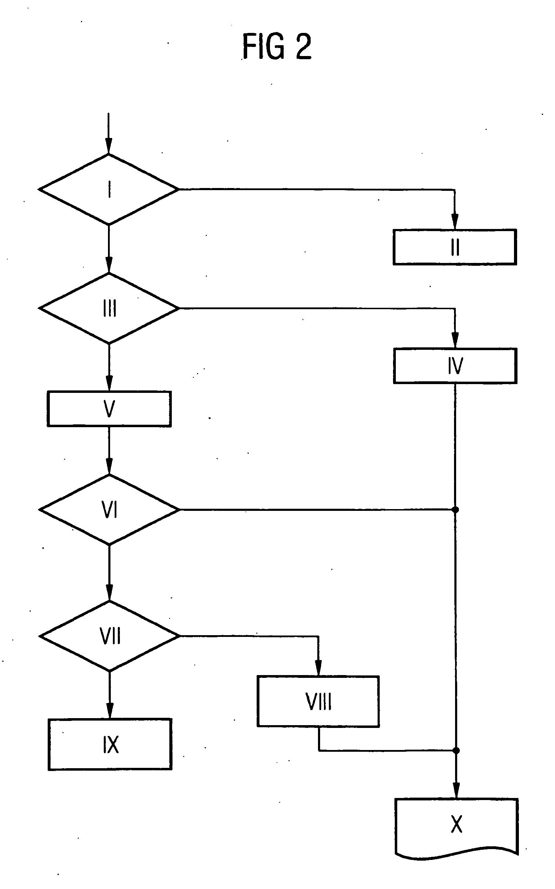

Es wird nun Bezug auf Fig. 2 genommen, worin ein Flussdiagramm zur Veranschaulichung der Verarbeitung von RSTP-BPDUs in den Brücken von Fig. 1 gezeigt ist.

Nach Empfang einer RSTP-BPDU wird zunächst in Schritt I geprüft, ob die RSTP-BPDU eine Rootbrücken-ID trägt, die jener Brücke entspricht, die zuletzt ausfiel, und ob der Timer T läuft. Falls dies zutrifft, so geht das Verfahren zu Schritt II über und die RSTP-BPDU wird von der Brücke ignoriert und verworfen. Falls dies nicht zutrifft, geht das Verfahren zu Schritt III über, wo geprüft wird, ob die RSTP-BPDU von der Rootbrücke stammt und ob sie selbst nicht die Brücke ist. Falls letzteres nicht zutrifft, geht das Verfahren zu Schritt IV über, wo das Feld "Verbunden-mit-Rootbrücke" auf "falsch" eingestellt wird. Im andern Fall, geht das Verfahren zu Schritt V über, wo das Feld "Verbunden-mit-Rootbrücke" im Konfigurationsrahmen auf "richtig" eingestellt wird. In diesem Fall geht das Verfahren zu Schritt VI über, wo geprüft wird, ob die Information von der neuen Rootbrücke stammt und ob die Information neu ist. Falls dies nicht zutrifft, geht das Verfahren zu Schritt X über, wo die RSTP-Verarbeitung fortgesetzt wird. Falls dies zutrifft, geht das Verfahren zu Schritt VII über, wo geprüft wird, ob es sich um ein Versagen eines direkt mit der Rootbrücke verbundenen Links handelt. Falls dies zutrifft, geht das Verfahren zu Schritt IX über, wo das Feld "Empfangen-RFN" auf "richtig" gesetzt und der Timer gestartet wird, um die alte Rootbrücke zu ignorieren, neu zu starten und eine zweite RFN-BPDU zu senden, in dem das "Root-Link-Ausfall-Flag" gelöscht ist. Falls dies nicht zutrifft, geht das Verfahren zu Schritt VIII über, in dem eine erste RFN-BPDU mit einem gesetzten Root-Link-Ausfall-Flag von allen Ports gesendet wird, außer jenem, an dem die RSTP-BPDU empfangen worden ist. Anschließend geht das Verfahren zu Schritt X über, um die RSTP-Verarbeitung fortzuführen.

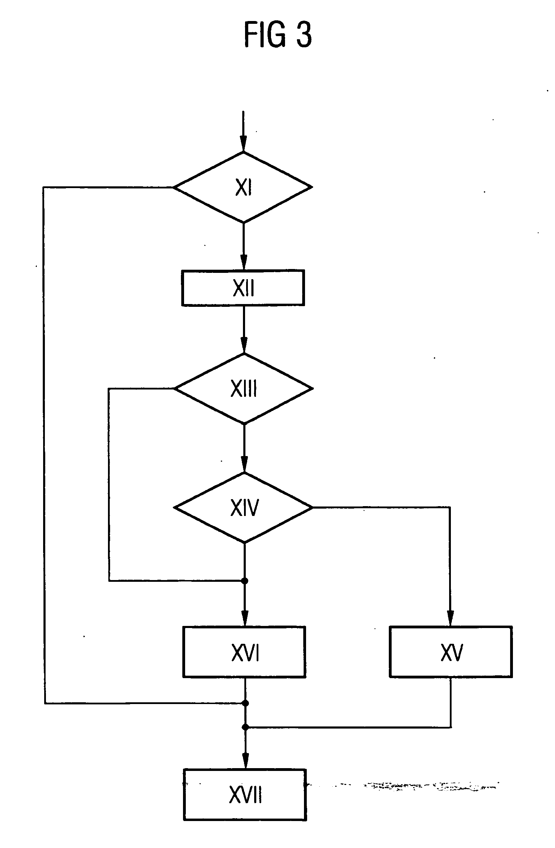

Es wird nun Bezug auf Fig. 3 genommen, worin ein Flussdiagramm zur Veranschaulichung der Verarbeitung von RFN-BPDUs in den Brücken von Fig. 1 gezeigt ist.

Nach Empfang einer RFN-BPDU wird zunächst in Schritt XI geprüft, ob die Information der RFN-BPDU redundant ist. Falls die Information der RFN-BPDU redundant ist, geht das Verfahren zu Schritt XVII über und die RFN-BPDU wird gelöscht. Falls die Information der RFN-BPDU nicht redundant ist, geht das Verfahren zu Schritt XII über und die Information der RFN-BPDU wird gespeichert. In diesem Fall geht das Verfahren anschließend zu Schritt XIII über, wo geprüft wird, ob in der RFN-BPDU das Root-Link-Ausfall-Flag gesetzt ist. Falls das Root-Link-Ausfall-Flag nicht gesetzt ist, geht das Verfahren zu Schritt XVI über, wo das Feld Empfangen-RFN auf "richtig" gesetzt und der Timer gestartet werden, um die alte Rootbrücke zu ignorieren, neu zu starten und eine RFN-BPDU zu senden, in dem das "Root-Link-Ausfall-Flag" gelöscht ist. In diesem Fall geht das Verfahren anschließend zu Schritt XVII über und die RFN-BPDU wird gelöscht. Falls zutrifft, dass in der RFN-BPDU das Root-Link-Ausfall-Flag gesetzt ist, geht das Verfahren zu Schritt XIV über, wo geprüft wird, ob es sich um den Ausfall eines direkt mit der Rootbrücke verbundenen Links handelt. Falls es sich um einen Ausfall eines direkt mit der Rootbrücke verbundenen Links handelt, geht das Verfahren zu Schritt XVI über, wo das Feld Empfangen-RFN auf "richtig" gesetzt und der Timer gestartet werden, um die alte Rootbrücke zu ignorieren, neu zu starten und eine RFN-BPDU zu senden, in der das "Root-Link-Ausfall-Flag" gelöscht ist. In diesem Fall geht das Verfahren anschließend zu Schritt XVII über und die RFN-BPDU wird gelöscht. Falls es sich nicht um einen Ausfall eines direkt mit der Rootbrücke verbundenen Links handelt, geht das Verfahren zu Schritt XV über, wo die empfangene RFN-BPDU auf alle anderen Ports weitergeschaltet wird. In diesem Fall geht das Verfahren anschließend zu Schritt XVII über und die RFN-BPDU wird gelöscht.

In dem erfindungsgemäßen Verfahren stützt sich die Erfassung des Ausfalls einer Rootbrücke auf die Tatsache, dass alle direkten Links zur Rootbrücke ausfallen, wenn die Rootbrücke ausfällt. Dies wird durch alle Brücken erfasst die mit der Rootbrücke direkt verbunden sind. Hierbei wird angenommen, dass alle Brücken in der Lage sind, einen Ausfall in der MAC-Schicht (Schicht 2 OSI-Modell) auf der anderen Seite des Links, beispielsweise aufgrund des Ausfalls der Brücke am anderen Ende des Links, zu erfassen. Alle Brücken im Netzwerk werden von dem Ausfall einer Verbindung zur Rootbrücke benachrichtigt, sobald dies von einer Brücke erfasst ist. Eine Brücke, die den Ausfall der Rootbrücke oder eines direkten Links zur Rootbrücke erfasst, sendet eine neue proprietäre BPDU (RFN-BPDU) um die anderen Brücken im Netzwerk hierüber zu informieren. Die Pfadkosten hängen von der speziellen Situation ab. Eine Brücke, welche die RFN-BPDU empfängt, verarbeitet diese, löscht alle ihre Zustände, startet falls notwendig neu, und leitet die RFN-BPDU, falls notwendig, auf alle ihre Ports, mit Ausnahme jenes Ports, an dem sie empfangen wurde. Die Verarbeitung einer empfangenen RFN-BPDU hängt davon ab, ob eine RFN-BPDU mit gleicher Information zuvor bereits empfangen und verarbeitet wurde. Dies wird erreicht, indem in jeder Brücke die Informationen der empfangenen RFN-BPDUs gespeichert werden. Eine Brücke, die mit der Rootbrücke direkt verbunden ist und keine alternativen Ports aufweist, erklärt sich selbst als neue Rootbrücke sobald die Rootbrücke ausfällt, indem sie BPDUs mit ihrer eigenen Brücken-ID als Rootbrücken-ID sendet. Eine Brücke, die mit der Rootbrücke direkt verbunden ist und wenigstens einen alternativen Port aufweist, ändert einen alternativen Port zum Root-Port, sobald die Rootbrücke ausfällt. Eine Rootbrücke wird als ausgefallen erklärt, wenn eine mit der Rootbrücke direkt verbundene Brücke einen Ausfall des Links zur Rootbrücke erfasst und entweder eine RFN-BPDU oder eine RSTP-BPDU, die eine neue Brücken-ID trägt, von einer anderen Brücke an einem ihrer Ports empfängt. Mit anderen Worten, eine Rootbrücke wird als ausgefallen erklärt, wenn eine Brücke den lokalen Ausfall eines Links zur Rootbrücke erfasst und zudem einen Hinweis darüber empfängt, dass eine andere Brücke ebenso ihre direkte Verbindung zur Rootbrücke verloren hat (entweder über eine RFN-BPDU oder eine RSTP-BPDU, die eine neue Rootbrücken-ID trägt). Jede Brücke überwacht ihre lokalen Ports, die mit der Rootbrücke direkt verbunden sind, indem die RSTP-BPDUs an jedem Port überwacht werden.

Die Erfindung stützt sich ferner auf die Tatsache, dass eine Brücke lokale Ports überwachen kann, die mit der Rootbrücke direkt verbunden sind. Dies ist nur möglich, wenn Punkt-zu-Punkt-Verbindungen zwischen den Brücken verwendet werden. Nach der Wiederherstellung einer ausgefallenen Rootbrücke akzeptieren alle Brücken automatisch die wiederhergestellte Brücke, die sich selbst als neue Rootbrücke ausgibt, wobei die Netzwerk-Konvergenzzeit im Bereich von Millisekunden liegt, wie von dem RSTP-Standard erwartet wird. Die Erfindung beeinträchtigt dieses Szenario nicht. Der TXHoldCount-Parameter sollte auf wenigstens 5 eingestellt werden, um die BPDU-Übertragung insbesondere während der Netzwerkkonvergenz zu maximieren.

Ein besonderer Vorteil der Erfindung ist eine schnelle Netzwerk-Rekonfiguration nach einem Ausfall der Rootbrücke. Wie Simulationen ergeben haben, liegen die Konvergenzzeiten sehr nahe bei den Konvergenzzeiten beim Hochfahren (Startup) des Netzwerks. Für ein Netzwerk mit 16 Brücken beträgt die Konvergenzzeit ca. 16-18 Millisekunden. Ein weiterer Vorteil liegt darin, dass bei einer Wiederherstellung der alten Rootbrücke, die Konvergenzzeit lediglich ca. 9-10 Millisekunden beträgt.

## Patentansprüche

1. Verfahren zum Rekonfigurieren eines paketvermittelten Kommunikationsnetzwerks, das ein Netzwerkprotokoll einsetzt, durch welches eine als Spannbaum geformte logische Topologie des Netzwerks eingerichtet werden kann, beschrieben durch die Schritte:
- Erfassen des Ausfalls eines direkten Links (L₁₂) zu einer Rootbrücke (1) des Spannbaums durch eine mit der Rootbrücke (1) über einen Link (L₁₂) direkt verbundene, keine alternativen Root-Ports aufweisende erste Brücke (2) und Starten eines Timers;
- Erfassen des Ausfalls eines direkten Links (L₁₃) zur Rootbrücke (1) durch wenigstens eine mit der Rootbrücke (1) über den Link (L₁₃) direkt verbundene, alternative Root-Ports aufweisende zweite Brücke (3) innerhalb einer wählbaren Zeitspanne des Timers;
- Übertragen eines von der ersten Brücke (2) generierten ersten Konfigurationsrahmens an die anderen Brücken des Netzwerks, wobei in dem ersten Konfigurationsrahmen als Herkunftskennung die Kennung der ersten Brücke (2) enthalten ist;
- Empfangen des ersten Konfigurationsrahmens durch wenigstens eine dritte Brücke (4) und Übertragen eines von der dritten Brücke (4) generierten zweiten Konfigurationsrahmens an die anderen Brücken des Netzwerks, wobei in dem zweiten Konfigurationsrahmen ein den Ausfall des direkten Links (L₁₂) der ersten Brücke (2) zur Rootbrücke (1) kennzeichnendes Flag gesetzt und als Herkunftskennung die Kennung der ersten Brücke (2) enthalten ist;
- Erfassen des ersten oder zweiten Konfigurationsrahmens durch wenigstens eine zweite Brücke (3) und Übertragen von von der zweiten Brücke generierten dritten Konfigurationsrahmen an die anderen Brücken des Netzwerks, wobei in dem dritten Konfigurationsrahmen das den Ausfall des direkten Links (L₁₂) der ersten Brücke (2) zur Rootbrücke (1) kennzeichnende Flag gelöscht und als Herkunftskennung die Kennung der zweiten Brücke (2) enthalten ist;
- Empfangen des dritten Konfigurationsrahmens durch die anderen Brücken des Netzwerks und Auslösen einer Rekonfiguration des Netzwerks mit Ermittlung eines neuen Spannbaums mittels des Netzwerkprotokolls.

2. Verfahren nach Anspruch 1, bei welchem innerhalb einer wählbaren Zeitspanne des Timers ein von der ursprünglichen Rootbrücke (1) gesendeter Konfigurationsrahmen von den übrigen Brücken des Netzwerks nicht verarbeitet wird.

3. Verfahren nach einem der Ansprüche 1 bis 2, bei welchem das Netzwerkprotokoll auf dem Spanning Tree Protocol gemäß IEEE-Norm 802.1d basiert.

4. Verfahren nach einem der Ansprüche 1 bis 2, bei welchem das Netzwerkprotokoll auf dem Rapid Spanning Tree Protocol gemäß IEEE-Norm 802.1w basiert.

5. Verfahren nach einem der Ansprüche 1 bis 4, bei welchem das Netzwerkprotokoll auf dem Mutiple Spanning Tree Protocol gemäß IEEE-Norm 802.1s basiert.

6. Brücke eines paketvermittelten Kommunikationsnetzwerks, das ein Netzwerkprotokoll einsetzt, durch das eine in Form eines Spannbaums geformte logische Topologie des Netzwerks eingerichtet werden kann, wobei die Brücke mit einer elektronischen Datenverarbeitungseinrichtung versehen ist, welche so eingerichtet ist, dass die Brücke ein Verfahren nach einem der Ansprüche 1 bis 5 durchführen kann.

7. Maschinenlesbarer Programmcode für eine elektronische Datenverarbeitungseinrichtung einer Brücke nach Anspruch 6, der Steuerbefehle enthält, die die Datenverarbeitungseinrichtung zur Durchführung eines Verfahrens nach einem der Ansprüche 1 bis 5 veranlassen.

8. Speichermedium mit einem darauf gespeicherten maschinenlesbaren Programmcode gemäß Anspruch 7.

9. Paketvermitteltes Kommunikationsnetzwerk mit über Links verbundenen Brücken gemäß Anspruch 6.

## Claims

1. Method for reconfiguring a packet-switched communication network which uses a network protocol by which a logical topology can be set up for the network in the form of a spanning tree, described by the steps:
- Detection of the failure of a direct link (L₁₂) to a root bridge (1) of the spanning tree by a first bridge (2) which is directly connected to the root bridge (1) via a link (L₁₂) and which has no alternative root ports, and starting of a timer;
- Detection, within a selectable interval of time on the timer, of the failure of a direct link (L₁₃) to the root bridge (1) by at least one second bridge (3) which is directly connected to the root bridge (1) via the link (L₁₃) and which has alternative root ports;
- Transmission to the other bridges in the network of a first configuration frame generated by the first bridge (2), the first configuration frame containing as its origin identifier the identifier of the first bridge (2);
- Receipt of the first configuration frame by at least one third bridge (4) and transmission to the other bridges in the network of a second configuration frame, generated by the third bridge (4), where a flag indicating a failure of the direct link (L₁₂) from the first bridge (2) to the root bridge (1) is set in the second configuration frame, which contains as its origin identifier the identifier of the first bridge (2);
- Detection of the first or second configuration frame by at least one second bridge (3) and transmission to the other bridges in the network of third configuration frames, generated by the second bridge, where the flag indicating a failure of the direct link (L₁₂) from the first bridge (2) to the root bridge (1) is cleared in the third configuration frame which contains as its origin identifier the identifier of the second bridge (2);
- Receipt of the third configuration frame by the other bridges in the network and initiation of a reconfiguration of the network with the determination of a new spanning tree, using the network protocol.

2. Method according to claim 1, wherein a configuration frame transmitted by the original root bridge (1) is not processed within a selectable interval of time on the timer by the other bridges in the network.

3. Method according to one of claims 1 to 2, wherein the network protocol is based on the Spanning Tree Protocol as per IEEE Standard 802.1d.

4. Method according to one of claims 1 to 2, wherein the network protocol is based on the Rapid Spanning Tree Protocol as per IEEE Standard 802.1w.

5. Method according to one of claims 1 to 4, wherein the network protocol is based on the Multiple Spanning Tree Protocol as per IEEE Standard 802.1s.

6. Bridge in a packet-switched communication network, which uses a network protocol by which a logical topology can be set up for the network in the form of a spanning tree, where the bridge is provided with an electronic data processing facility which is set up in such a way that the bridge can carry out the method according to one of claims 1 to 5.

7. Machine-readable program code for an electronic data processing facility in a bridge according to claim 6, containing control instructions which cause the data processing facility to carry out a method according to one of claims 1 to 5.

8. Storage medium, having stored on it machine-readable program code according to claim 7.

9. Packet-switched communication network with bridges connected via links, according to claim 6.

## Revendications

1. Procédé pour reconfigurer un réseau de communication à commutation de paquets qui met en oeuvre un protocole de réseau permettant de réaliser une topologie logique du réseau en forme d'arbre couvrant, ledit procédé étant décrit par les étapes :
- détection de la défaillance d'un lien direct (L₁₂) vers un pont racine (1) de l'arbre couvrant par un premier pont (2) directement relié au pont racine (1) via un lien (L₁₂) et ne présentant pas de ports racines alternatifs, et démarrage d'un timer ;
- détection de la défaillance d'un lien direct (L₁₃) vers le pont racine (1) par au moins un deuxième pont (3) directement relié au pont racine (1) via le lien (L₁₃) et présentant des ports racines alternatifs, dans un intervalle de temps sélectionnable du timer ;
- transmission d'une première trame de configuration générée par le premier pont (2) aux autres ponts du réseau, l'identifiant du premier pont (2) étant contenu dans la première trame de configuration en tant qu'identifiant de l'origine ;
- réception de la première trame de configuration par au moins un troisième pont (4) et transmission d'une deuxième trame de configuration générée par le troisième pont (4) aux autres ponts du réseau, un drapeau indiquant la défaillance du lien direct (L₁₂) du premier pont (2) vers le pont racine (1) étant mis dans la deuxième trame de configuration et l'identifiant du premier pont (2) y étant contenu en tant qu'identifiant de l'origine ;
- détection de la première ou de la deuxième trame de configuration par au moins un deuxième pont (3) et transmission de troisièmes trames de configuration générées par le deuxième pont aux autres ponts du réseau, le drapeau indiquant la défaillance du lien direct (L₁₂) du premier pont (2) vers le pont racine (1) étant effacé dans la troisième trame de configuration et l'identifiant du deuxième pont (2) y étant contenu en tant qu'identifiant de l'origine ;
- réception de la troisième trame de configuration par les autres ponts du réseau et déclenchement d'une reconfiguration du réseau avec détermination d'un nouvel arbre couvrant au moyen du protocole de réseau.

2. Procédé selon la revendication 1, dans lequel une trame de configuration émise par le pont racine d'origine (1) n'est pas traitée par les autres ponts du réseau pendant un intervalle de temps sélectionnable du timer.

3. Procédé selon l'une des revendications 1 à 2, dans lequel le protocole de réseau est basé sur le protocole d'arbre couvrant selon la norme IEEE 802.1d.

4. Procédé selon l'une des revendications 1 à 2, dans lequel le protocole de réseau est basé sur le protocole d'arbre couvrant rapide selon la norme IEEE 802.1w.

5. Procédé selon l'une des revendications 1 à 2, dans lequel le protocole de réseau est basé sur le protocole d'arbre couvrant multiple selon la norme IEEE 802.1s.

6. Pont d'un réseau de communication à commutation de paquets qui met en oeuvre un protocole de réseau permettant de réaliser une topologie logique du réseau en forme d'arbre couvrant, le pont étant pourvu d'un dispositif électronique de traitement de données qui est aménagé de manière telle que le pont peut exécuter un procédé selon l'une des revendications 1 à 5.

7. Code de programme lisible par machine pour un dispositif électronique de traitement de données d'un pont selon la revendication 6, lequel contient des ordres de commande qui font exécuter au dispositif de traitement de données un procédé selon l'une des revendications 1 à 5.

8. Support de mémoire avec un code de programme selon la revendication 7 lisible par machine et stocké sur ledit support.

9. Réseau de communication à commutation de paquets avec des ponts selon la revendication 6 reliés via des liens.
